(19) Europäisches Patentamt
European Patent Office
Office européen des brevets

(11) EP 1 585 183 A1

(12) EUROPEAN PATENT APPLICATION

(43) Date of publication:
12.10.2005 Bulletin 2005/41

(51) Int Cl.7: **H01M 8/10**, C07F 7/18

(21) Application number: **05006828.7**

(22) Date of filing: **29.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.03.2004 JP 2004092254**

(71) Applicant: **Fuji Photo Film Co. Ltd.**
**Kanagawa 250-0193 (JP)**

(72) Inventor: **Wariishi, Koji**
**c/o Fuji Photo Film Co., Ltd.**
**Haibara-gun Shizuoka 421-0396 (JP)**

(74) Representative: **HOFFMANN EITLE**
**Patent- und Rechtsanwälte**
**Arabellastrasse 4**
**81925 München (DE)**

(54) **Compound for use as a solid electrolyte or proton conductor in a membrane electrode assembly in fuel cells**

(57) A compound useful for a proton conductor which is obtained through sulfonation followed by sol-gel reaction, or through sol-gel reaction followed by sulfonation of a compound of the following formula:

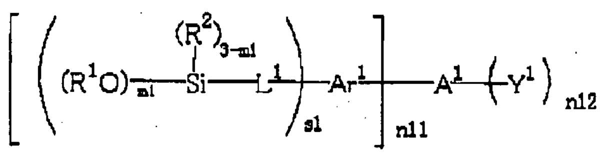

wherein $A^1$ is meaogen-containing organic group; $R^1$ is H, alkyl, aryl or silyl; $R^2$ is alkyl, aryl or heterocyclic; ml is 1-3; $L^1$ is single bond, alkylene, -O-, -CO-, or a combination thereof; $Ar^1$ is arylene or heteroarylene having electron-donating group; $Y^1$ is polymerizable group; n11 is 1-8; n12 is 1-4; and s1 is 1 or 2.

EP 1 585 183 A1

**Description**

FIELD OF THE INVENTION

The present invention relates to a compound, and to a solid electrolyte, a proton conductor, a membrane electrode assembly and a fuel cell comprising the compound.

DESCRIPTION OF THE RELATED ART

The important functions of the electrolytic membrane (proton conductor membrane) for solid polymer fuel cells are to physically insulate the fuel (e.g., hydrogen, aqueous methanol solution) fed to the anode, catalyst electrode from the oxidizing gas (e.g., oxygen) fed to the cathode, to electrically insulate the anode from the cathode, and to transmit the proton having been formed on the anode to the cathode. To fulfill these functions, the electrolytic membrane must have some mechanical strength and good proton conductivity.

In the electrolytic membrane for solid polymer fuel cells, generally used is a sulfonic acid group-having perfluorocarbon polymer such as typically Nafion®. The electrolytic membrane of the type has good ionic conductivity and has relatively high mechanical strength, but has some problems to be solved such as those mentioned below. Concretely, in the electrolytic membrane, water and the sulfonic acid group form cluster channels, and protons move in the cluster channels via water therein. Therefore, the ionic conductivity of the membrane significantly depends on the water content thereof that is associated with the humidity in the service environment in which the cells are driven. For poisoning reduction in the catalyst electrode with CO and for activation of the catalyst electrode therein, solid polymer fuel cells are preferably driven at a temperature falling within a range of from 100 to 150°C. However, within such a middle-temperature range, the water content of the electrolytic membrane in the cells lowers with the reduction in the ionic conductivity thereof, and it causes a problem in that the expected cell characteristics could not be obtained. In addition, the softening point of the electrolytic membrane is around 120°C and when the cells are driven at a temperature around it, then still another problem with it is that the mechanical strength of the electrolytic membrane is unsatisfactory. On the other hand, when the electrolytic membrane of the type is used in direct methanol fuel cells (DMFC), then it causes still other problems such as those mentioned below. Naturally, the barrier ability of the membrane against the fuel methanol is not good as the membrane readily absorbs water, and therefore methanol having been fed to the anode penetrates through the electrolytic membrane to reach the cathode. Owing to it, the cell output power lowers, and this is referred to as a methanol-crossover phenomenon. For practical use of DMFC, this is one important problem to be solved.

Given that situation, there is a growing tendency for the development of other proton-conductive materials substitutable for Nafion®, and some hopeful electrolytic materials have been proposed. For example, proposed is an organic-inorganic nanohybrid proton-conductive material that is obtained through sol-gel reaction of a precursor, organic silicon compound in the presence of a proton acid. See Japanese Patent 3,103,888, German Patent DE 10061920A1, *Electrochimica Acta*, 1988, Vol. 43, Nos. 10-11, p. 1301, and *Solid State Ionics,* 2001, No. 145, p. 1277. The organic-inorganic composite and hybrid proton-conductive material of the type comprise an inorganic component and an organic component, in which the inorganic component comprises silicic acid and proton acid and serves as a proton-conductive site and the organic component serves to make the material flexible. When the inorganic component is increased so as to increase the proton conductivity of the membranes formed of the material, then the mechanical strength of the membranes lowers. On the other hand, however, when the organic component is increased so as to increase the flexibility of the membranes, then the proton conductivity of the membranes lowers. Therefore, the material that satisfies the two characteristics are difficult to obtain. Regarding the methanol perviousness of the material, which is an important characteristic of the material tor use in DMFC, any satisfactory description is not found in the related literature.

SUMMARY OF THE INVENTION

Objects of the present invention are to provide a compound for ion exchanger and proton conductors capable of being used for ion-exchange membranes and proton-conductive membranes which have a high ionic conductivity and are not so much troubled by methanol-crossover through them and which are therefore favorable for DMFC, and to provide a solid electrolyte and a proton conductor comprising the compound, a membrane electrode assembly comprising the proton conductor, and a high-power fuel cell comprising the membrane electrode assembly.

Taking the above-mentioned objects into consideration, we, the present inventors have assiduously studied and, as a result, have found that, when a sol-gel reaction precursor of an aryl group-containing organosilicon compound that has a mesogen and an electron-donating group (e. g., a hydroxyl group or an alkoxy group, more preferably a hydroxyl group) in the molecule is subjected to sulfonation followed by sol-gel reaction or to sol-gel reaction followed

by sulfonation, then the organic molecular chain and the proton-donating group-bonded silicon-oxygen matrix moiety that is to be a proton-conductive channel undergo nano-level phase separation, and preferably the organic molecular chain is oriented horizontally to the membrane face, and, as a result, an organic-inorganic nano-hybrid material may be constructed in which the proton-conductive channel runs to cross the membrane face. In addition, we have further found that the membrane thus obtained is flexible and has high mechanical strength. On the basis of these findings, we have reached the present invention. In particular, an organic-inorganic hybrid proton conductor that is obtained through sol-gel reaction of a sulfonic acid compound obtained through sulfonation of at least one organosilicon compound of formulae (I) and (II) is especially favorable for the objects of the invention. Through observation thereof with a polarizing microscope, we have clarified that the proton conductor of the type forms aggregates of oriented organic molecular chains therein. In this case, the proton-donating group-bonded silicon-oxygen network that is to be a proton-conductive channel is formed inevitably in the direction perpendicular to the orientation direction of the organic molecule aggregates. Accordingly, when the orientation direction of the organic molecular chains is controlled to the horizontal direction relative to the membrane face, then the proton-conductive channels are constructed to cross the membrane.

Concretely, the objects of the invention can be attained by the following constitution:

(1) A compound obtained through sulfonation followed by sol-gel reaction, or through sol-gel reaction followed by sulfonation of at least one compound of the following formulae (I) and (II):

(I)

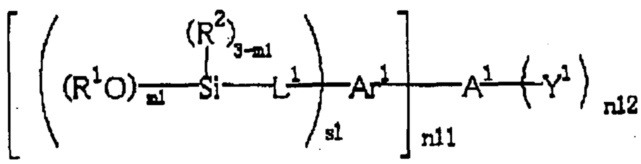

(II)

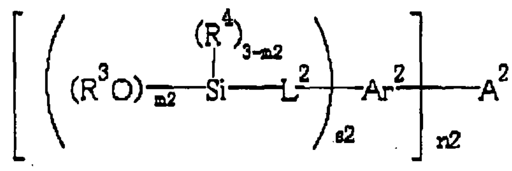

wherein $A^1$ and $A^2$ each independently represent a mesogen-containing organic group; $R^1$ and $R^3$ each independently represent a hydrogen atom, an alkyl group, an aryl group or a silyl group; $R^2$ and $R^4$ each independently represent an alkyl group, an aryl group or a heterocyclic group; m1 and m2 each independently indicate an integer of from 1 to 3; $L^1$ and $L^2$ each independently represent a single bond, an alkylene group, -O-, -CO-, or a divalent linking group of a combination of any of these groups; $Ar^1$ and $Ar^2$ each independently represent an arylene or heteroarylene group having at least one electron-donating group; $Y^1$ represents a polymerizable group capable of forming a carbon-carbon bond or a carbon-oxygen bond through polymerization; n11 and n2 each independently indicate an integer of from 1 to 8; n12 indicates an integer of from 1 to 4; s1 and s2 each independently indicate an integer of 1 or 2.

(2) The compound of above (1), wherein the electron-donating group is a hydroxyl group.

(3) A solid electrolyte containing the compound of above (1) or (2).

(4) A proton conductor containing the compound of above (1) or (2).

(5-1) A membrane electrode assembly which has at least two electrodes and has the proton conductor of above (4) between the two electrodes.

(5-2) A membrane electrode assembly having the proton conductor of above (4) between the anode and the cathode thereof.

(6) A fuel cell having the membrane electrode assembly of above (5-1) and (5-2).

(7) A method for producing a proton conductor, which includes a step of sol-gel reaction followed by sulfonation of at least one compound of formulae (I) and (II) .

(8) A method for producing a proton conductor, which includes a step of sulfonation followed by sol-gel reaction of at least one compound of formulae (I) and (II) .

(9) The method for producing a proton conductor of above (7) or (8), wherein $SO_3$ and/or $SO_3$-organic substance complex is used for the sulfonation.

In the proton conductor of the invention, the sulfo group is covalent-bonded to the silicon/oxygen three-dimensional crosslinked matrix, and, in addition, the compound for the conductor has a mesogen in the molecule thereof. Therefore, in this, at least a part of the organic molecular chains are oriented to form aggregates. Accordingly, the proton conductor has a high ionic conductivity at room temperature and is resistant to an aqueous methanol solution, and the methanol crossover through it is therefore reduced. When the proton conductor is used in direct methanol fuel cells, then it may prevent voltage reduction and enables higher output as compared with conventional proton conductors.

BRIEF DESCRIPTION OF THE DRAWINGS

Fig. 1 is a schematic cross-sectional view showing the constitution of a catalyst membrane electrode assembly that uses the proton conductor of the invention.
Fig. 2 is a schematic cross-sectional view showing one example of the constitution of the fuel cell of the invention.
Fig. 3 is a schematic view showing a stainless cell employed in determination of methanol perviousness through the membrane of the invention.

DETAILED DESCRIPTION OF THE INVENTION

The invention is described in detail hereinunder. In this description, the numerical range expressed by the wording "a number to another number" means the range that falls between the former number indicating the lowermost limit of the range and the latter number indicating the uppermost limit thereof ,

[1] Organosilicon Compound and Sulfonic Acid Group-Having Precursor:

The proton conductor of the invention has a structure in which organic molecular chains containing a sulfo group and a mesogen group are covalent-bonded to the silicon/oxygen three-dimensional crosslinked matrix thereof, and this can be formed through sol-gel reaction and sulfonation of a precursor, organosilicon compound represented by the following formula (I) or (II), which has an arylene group containing an electron-donating group, preferably a hydroxyl group, and a mesogen group for promoting the orientation of organic molecular chains. The precursor for forming it is described in detail hereinunder.

[1-1] Mesogen-containing Organosilicon Compound Precursor:

The proton conductor of the invention can be formed through sol-gel reaction and sulfonation of a precursor, organosilicon compound of the following formula (I) or (II) .

(I)

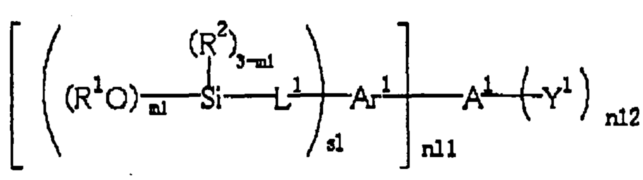

(II)

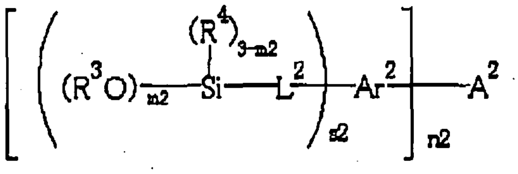

In these formulae (I) and (II), $A^1$ and $A^2$ each independently represent a mesogen-containing organic group; $R^1$ and $R^3$ each independently represent a hydrogen atom, an alkyl group, an aryl group or a silyl group; $R^2$ and $R^4$ each independently represent an alkyl group, an aryl group or a heterocyclic group; m1 and m2 each independently indicate an integer of from 1 to 3; $L^1$ and $L^2$ each independently represent a single bond, an alkylene group, -O-, -CO-, or a divalent linking group of a combination of any of these groups; $Ar^1$ and $Ar^2$ each independently represent an arylene or heteroarylene group having at least one electron-donating group; $Y^1$ represents a polymerizable group capable of forming a carbon-carbon bond or a carbon-oxygen bond through polymerization; n11 and n2 each independently indicate an integer of from 1 to 8; n12 indicates an integer of from 1 to 4; s1 and s2 each independently indicate an integer of 1 or 2.

In the mesogen-containing organosilicon compound of formulae (I) and (II), the alkyl group for $R^1$ to $R^4$ is preferably a straight, branched or cyclic alkyl group (e.g., alkyl group having from 1 to 20 carbon atoms, such as methyl group, ethyl group, isopropyl group, n-butyl group, 2-ethylhexyl group, n-decyl group, cyclopropyl group, cyclohexyl group, cyclododecyl group) ; the aryl group for $R^1$ to $R^4$ is preferably a substituted or unsubstituted phenyl or naphthyl group having from 6 to 20 carbon atoms. Preferred examples of the heterocyclic group for $R^2$ and $R^4$ are a substituted or unsubstituted heterocyclic 6-membered ring (e.g., pyridyl group, morpholino group), and a substituted or unsubstituted heterocyclic 5-membered ring (e.g., furyl group, thiophene group). Preferred examples of the silyl group for $R^1$ and $R^3$ are a silyl group substituted by three alkyl groups selected from those having from 1 to 10 carbon atoms (e.g., trimethylsilyl group, triethylsilyl group, triisopropylsilyl group), and a polysiloxane group (e.g., $-(Me_2SiO)_nH$ (n = 10 to 100). Preferably, m1 and/or m2 are 2 or 3, more preferably m1 and/or m2 are 3. When m1, m2, 3-m1, 3-m2, n11, n12 or n2 is 2 or more, then the parenthesized units may be the same or different. Similarly, when s1, s2 and n12 are 2 or more, then the parenthesized units may be the same or different.

The above-mentioned substituent may be further substituted with any of the following substituents.

1. Alkyl group:

The alkyl group may be optionally substituted, and is more preferably an alkyl group having from 1 to 24 carbon atoms, even more preferably from 1 to 10 carbon atoms. It may be straight or branched. For example, it includes methyl, ethyl, propyl, butyl, i-propyl, i-butyl, pentyl, hexyl, octyl, 2-ethylhexyl, tert-octyl, decyl, dodecyl, tetradecyl, 2-hexyldecyl, hexadecyl, octadecyl, cyclohexylmethyl and octylcyclohexyl groups.

2. Aryl group:

The aryl group may be optionally substituted and condensed, and is more preferably an aryl group having from 6 to 24 carbon atoms. For example, it includes phenyl, 4-methylphenyl, 3-cyanophenyl, 2-chlorophenyl and 2-naphthyl groups.

3. Heterocyclic group:

The heterocyclic group may be optionally substituted and condensed. When it is a nitrogen-containing heterocyclic group, the nitrogen atom in the ring thereof may be optionally quaternated. More preferably, the heterocyclic group has from 2 to 24 carbon atoms. For example, it includes 4-pyridyl, 2-pyridyl, 1-octylpyridinium-4-yl, 2-pyrimidyl, 2-imidazolyl and 2-thiazolyl groups.

4. Alkoxy group:

More preferably, the alkoxy group has from 1 to 24 carbon atoms. For example, it includes methoxy, ethoxy, butoxy, octyloxy, methoxyethoxy, methoxypenta(ethyloxy), acryloyloxyethoxy and pentafluoropropoxy groups.

5. Acyloxy group:

More preferably, the acyloxy group has from 1 to 24 carbon atoms. For example, it includes acetyloxy and benzoyloxy groups.

6. Alkoxycarbonyl group:

More preferably, the alkoxycarbonyl group has from 2 to 24 carbon atoms. For example, it includes methoxycarbonyl and ethoxycarbonyl groups.

7. Carbamoyloxy group, alkoxycarbonyloxy group:

For example, these include N,N-dimethylcarbamoyloxy, N,N-diethylcarbamoyloxy, morpholinocarbonyloxy, N,N-di-n-octylaminocarbonyloxy, N-n-octylcarbamoyloxy, methoxycarbonyloxy, ethoxycarbonyloxy, tert-butoxycarbonyloxy and n-octylcarbonyloxy groups.

8. Aryloxycarbonyloxy group:

For example, this includes phenoxycarbonyloxy, p-methoxyphenoxycarbonyloxy and p-n-hexadecyloxyphenoxycarbonyloxy groups.

9. Amino group:

For example, this includes amino, methylamino, dimethylamino, anilino, N-methyl-anilino and diphenylamino groups.

10. Acylamino group:

For example, this includes formylamino, acetylamino, pivaloylamino, lauroylamino, benzoylamino and 3,4,5-tri-n-octyloxyphenylcarbonylamino groups.

11. Aminocarbonylamino group:

For example, this includes carbamoylamino, N,N-dimethylaminocarbonylamino, N,N-diethylaminocarbonylamino and morpholinocarbonylamino groups.

12. Alkoxycarbonylamino group:

For example, this includes methoxycarbonylamino, ethoxycarbonylamino, tert-butoxycarbonylamino, n-octadecyloxycarbonylamino and N-methyl-methoxycarbonylamino groups.

13. Aryloxycarbonylamino group:

For example, this includes phenoxycarbonylamino, p-chlorophenoxycarbonylamino and m-n-octyloxyphenoxycarbonylamino groups.

14. Sulfamoylamino group:

For example, this includes sulfamoylamino, N,N-dimethylaminosulfonylamino and N-n-octylaminosulfonylamino groups.

15. Alkyl and arylsulfonylamino groups:

For example, these include methylsulfonylamino, butylsulfonylamino, phenylsulfonylamino, 2,3,5-trichlorophenylsulfonylamino and p-methylphenylsulfonylamino groups.

16. Sulfamoyl group:

For example, this includes N-ethylsulfamoyl, N-(3-dodecyloxypropyl)sulfamoyl, N,N-dimethylsulfamoyl, N-acetylsulfamoyl, N-benzoylsulfamoyl and N- (N'-phenylcarbanoyl) sulfamoyl groups.

17. Alkyl and arylsulfinyl groups:

For example, these include methylsulfinyl, ethylsulfinyl, phenylsulfinyl and p-methylphenylsulfinyl groups.

18. Alkyl and arylsulfonyl groups:

For example, these include methylsulfonyl, ethylsulfonyl, phenylsulfonyl and p-methylphenylsulfonyl groups.

19. Acyl group:

For example, this includes acetyl, pivaloyl, 2-chloroacetyl, stearoyl, benzoyl and p-n-octyloxyphenylcarbonyl groups.

20. Aryloxycarbonyl group:

For example, this includes phenoxycarbonyl, o-chlorophenoxycarbonyl, m-nitrophenoxycarbonyl and p-tert-butylphenoxycarbonyl groups.

21. Carbamoyl group:

For example, this includes carbamoyl, N-methylcarbamoyl, N,N-dimethylcarbamoyl, N,N-di-n-octylcarbamoyl and N-(methylsulfonyl)carbamoyl groups.

22. Silyl group:

Preferably, the silyl group has from 3 to 30 carbon atoms, including, for example, trimethylsilyl, tert-butyldimethylsilyl, phenyldimethylsilyl, trimethoxysilyl, triethoxysilyl, dimethoxymethylsilyl, diethoxymethylsilyl and triacetoxysilyl groups.

23. Cyano group.

24. Fluoro group.

25. Mercapto group.

26. Hydroxyl group.

$A^1$ and $A^2$ each independently represent a mesogen-containing organic group. Preferred examples of the mesogen group are described in Dietrich Demus & Horst Zaschke, *Flussige Kristalle in Tablelen II,* 1984, pp. 7-18. Those of the following formula (III) are especially preferred:

(III)

$$[Q^1\text{-}Y^2\text{-}Q^2]_{m3}$$

In formula (III), $Q^1$ represents a single bond, a monovalent group, or an (n12 + 1) -valent linking group; $Q^2$ represents a single bond, an (n11 + 1) -valent group or an (n2 +1) -valent linking group. n11, n12 and n2 are the same numbers as n11, n12 and n2 in formulae (I) and (II) . Of $Q^1$ and $Q^2$, $Q^2$ bonds to the Si containing group.

More preferably, $Q^1$ is a divalent linking group or a single bond. Also more preferably, $Q^2$ is a divalent linking group or a single bond.

The divalent linking group for $Q^1$ and $Q^2$ is preferably -CH=CH-, -CH=N-, -N=N-, -N (O) =N-, -COO-, -COS-, -CONH-, $-COCH_2-$, $-CH_2CH_2-$, $-OCH_2-$, $-CH_2NH-$, $-CH_2-$, -CO-, -O-, -S-, -NH-, - $(CH_2)_{(1\ to\ 3)}$-, -CH=CH-COO-, -CH=CH-CO-, -(C≡C)-, arylene, or their combination, more preferably $-CH_2-$, -CO-, -O-, -CH=CH-, -CH=N-, -N=N-, arylene, or their combination, even more preferably, $-CH_2-$, -CO-, -O-, arylene, or their combination. When these are combined, the same linking groups, or different linking groups or both of the two may be combined in any desired manner, and the number of the groups to be combined is not specifically defined.

Examples of the monovalent group for $Q^1$ are the above-mentioned divalent linking groups of which one end is terminated with a hydrogen atom or a halogen atom, and a hydrogen atom and a halogen atom. The halogen atom is preferably a fluorine atom. m3 is an integer of from 1 to 3. When m3 is 2 or more, then the parenthesized units may be the same or different.

$Y^2$ represents a divalent, 4-, 5-, 6- or 7-membered ring substituent, or a condensed ring substituent comprising them. $Y^2$ is preferably a 6-membered aromatic group, a 4- to 6-membered saturated or unsaturated alicyclic group, a 5- or 6-membered heterocyclic group, or a condensed ring comprising them. For the condensed ring, the above-mentioned rings for $Y^2$ are preferably condensed to form a disc-like structure, for example, triphenylene.

Preferred examples of $Y^1$ are substituents of the following (Y-1) to (Y-30), and their combinations. Of those substituents, more preferred are (Y-1), (Y-2), (Y-18), (Y-19), (Y-21), (Y-22) and (Y-29); and more preferred are (Y-1), (Y-2), (Y-21) and (Y-29).

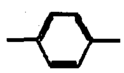
(Y-1)

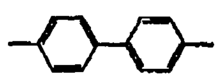
(Y-2)

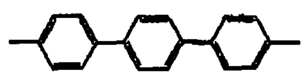
(Y-3)

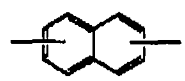
(Y-4)

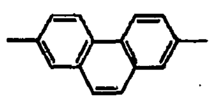
(Y-5)

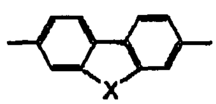
X = $CH_2$,O,CO,NH
(Y-6)

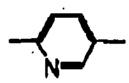
(Y-7)

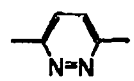
(Y-8)

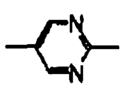
(Y-9)

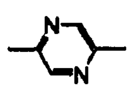
(Y-10)

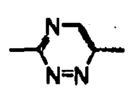
(Y-11)

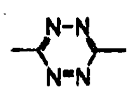
(Y-12)

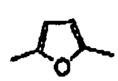
(Y-13)

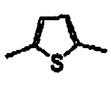
(Y-14)

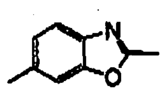
(Y-15)

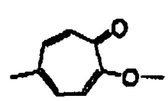
(Y-16)

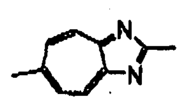
(Y-17)

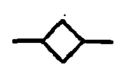
(Y-18)

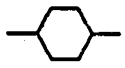
(Y-19)

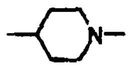
(Y-20)

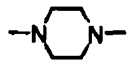
(Y-21)

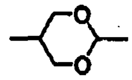
(Y-22)

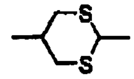
(Y-23)

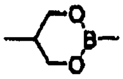
(Y-24)

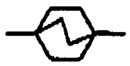
(Y-25)

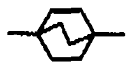
(Y-26)

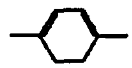
(Y-27)

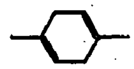
(Y-28)

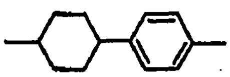
(Y-29)

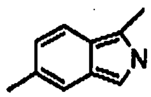
(Y-30)

Preferably, the organosilicon compound contains an alkyl or alkylene group having at least 5 carbon atoms along with the mesogen, for enhancing the molecular orientation of the compound. Preferably, the alkyl or alkylene group has from 5 to 25 carbon atoms, more preferably from 6 to 18 carbon atoms. The alkyl or alkylene group in the organosilicon compound may be substituted. Preferred examples of the substituent for the group are an alkyl group, an aryl group, a heterocyclic group, an alkoxy group, an acyloxy group, an alkoxycarbonyl group, a cyano group and a fluoro group, such as those mentioned hereinabove.

$L^1$ and $L^2$ each independently represent a single bond, an alkylene group, -O-, -CO-, or a divalent linking group of a combination of any of these groups, preferably an alkylene group, more preferably an alkylene group having from 2 to 12 carbon atoms, even more preferably an alkylene group having from 2 to 8 carbon atoms. Single bond means that Si directly bonds to $Ar^1$ or $Ar^2$.

$Y^1$ represents a polymerizable group capable of forming a carbon-carbon bond or a carbon-oxygen bond through polymerization, including, for example, acryloyl, methacryloyl, vinyl, ethynyl and alkyleneoxide (e.g., ethyleneoxide, trimethyleneoxide) groups. Preferably, it is an acryloyl, methacryloyl, ethyleneoxide or trimethyleneoxide group.

$Ar^1$ and $Ar^2$ each independently represent an arylene or heteroarylene group (hereinafter referred to as "(hetero)arylene group") substituted with at least one electron-donating group. The electron-donating group is preferably a substituent having a Hammett's σp value of at most -0.15. The Hammett's σp value is described in *Chemical Review,* Vol. 91, No. 2 (1991), pp. 165-195. For example, the substituent includes a methyl group (-0.17), a methoxy group (-0.27), a hydroxyl group (-0.37), a dimethylamino group (-0.83) . Of those, preferred are a hydroxyl group and an alkoxy group (more preferably, methoxy or ethoxy). Even more preferred is a hydroxyl group. The electron-donating group may be in any position in $Ar^1$ and $Ar^2$, but is preferably so positioned that the ortho or para-position is unsubstituted. The (hetero)arylene group may have any other substituent than the electron-donating group, still having a position at which the group is sulfonated. For example, the group may be substituted with any substituent mentioned above.

In addition, the (hetero) arylene group may be condensed. In this case, it preferably forms a biryclic group. The arylene or heteroarylene group having at least one electron-donating group is, for example, a (hetero)arylene group having from 6 to 24 carbon atoms, more concretely including a hydroxyphenylene group, a hydroxynaphthylene group, a methoxyfurandiyl group, a methoxythiophene-diyl group, and a hydroxypyridine-diyl group.

In formulae (I) and (II), $Ar^1$ or $Ar^2$ may directly bond to the mesogen group, the alkyl group or the alkenyl group that constitutes the organic group $A^1$ or $A^2$, or may bond thereto via a linking group. Preferably, the linking group is an alkylene group having from 1 to 15 carbon atoms, or a combination of such an alkylene group and the linking group $Q^1$ or $Q^2$ of the mesogen.

Examples of the mesogen-containing organosilicon compound of formulae (I) and (II) are mentioned below,

to which, however, the invention should not be limited.

A-1

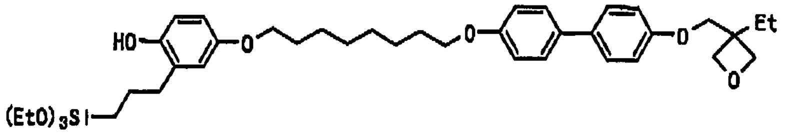

A-2

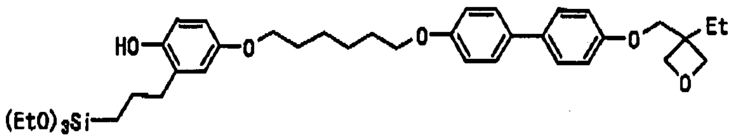

A-3

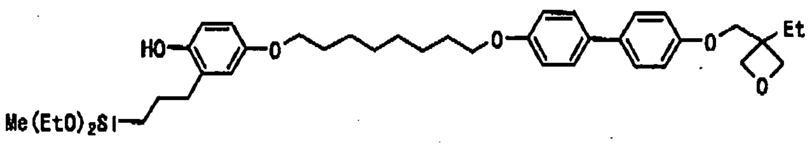

A-4

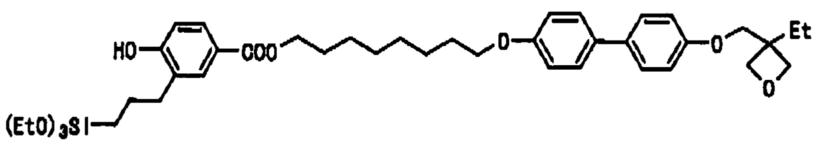

A-5

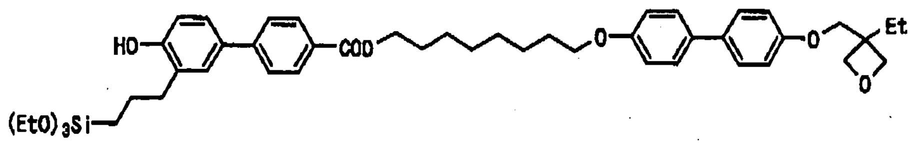

A-6

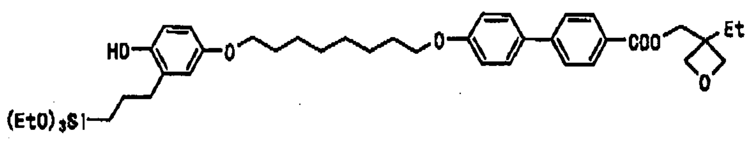

A-7

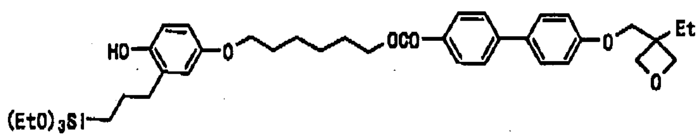

A-8

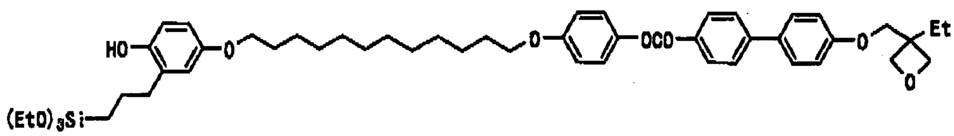

A-9

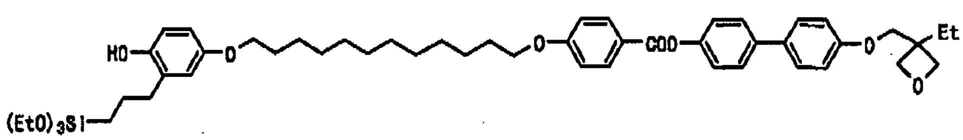

A-10

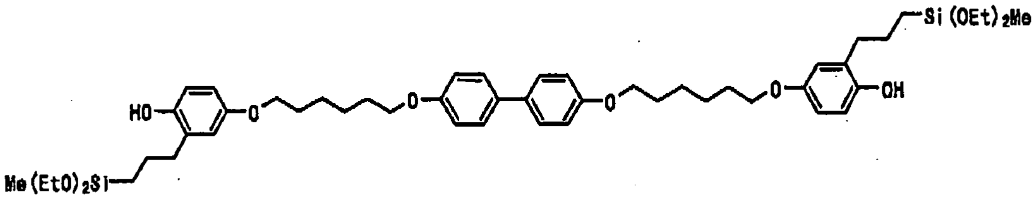

A-11

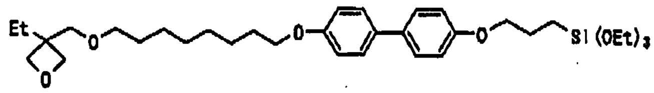

A-12

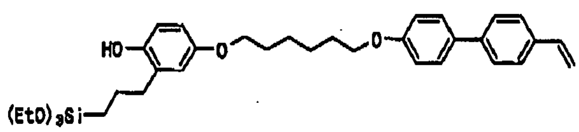

A-13

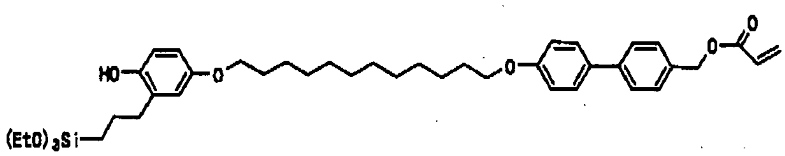

A-14

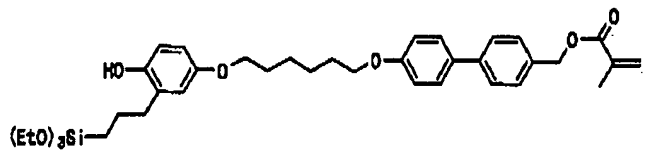

A-15

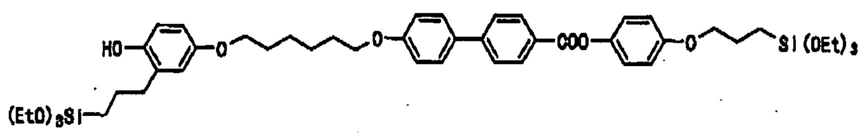

A-16

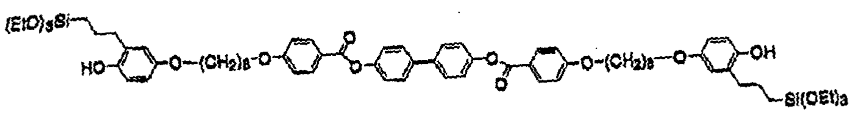

A-17

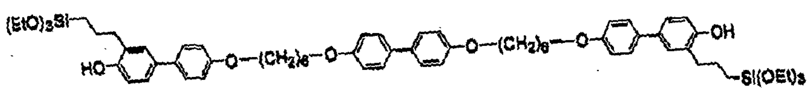

A-18

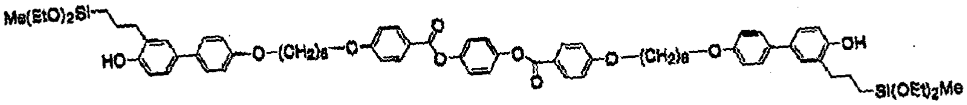

A-19 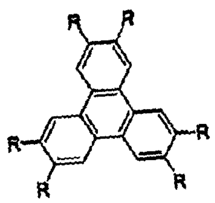 R = 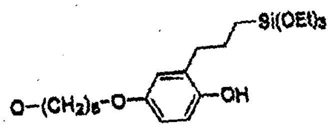

A-20 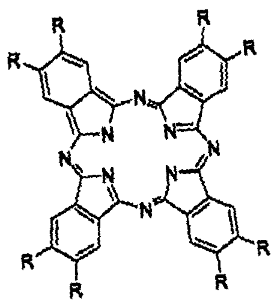 R = 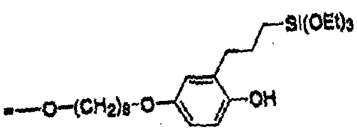

Method for Producing Compound of Formula (I) or (II) :

The compound of formula (I) or (II) may be readily produced through hydrosilylation of a corresponding olefin compound that contains an arylene group having an electron-donating group (preferably a hydroxyl group), and a mesogen. The olefin compound having a hydroxyl group-containing arylene group may be produced, for example, through [3.3] sigmatropic rearrangement (Claisen rearrangement) of an allyl aryl ether in an inorganic solvent (e.g., decahydronaphthalene, diphenyl ether, dimethylaniline, diethylaniline) or without solvents. For the hydrosilylation, for example, employable is the method described in *Lecture of Experimental Chemistry,* 4th Edition (by the Chemical Society of Japan, Maruzen), Vol. 24, p. 125.

Example of Producing Compound (A-1) :

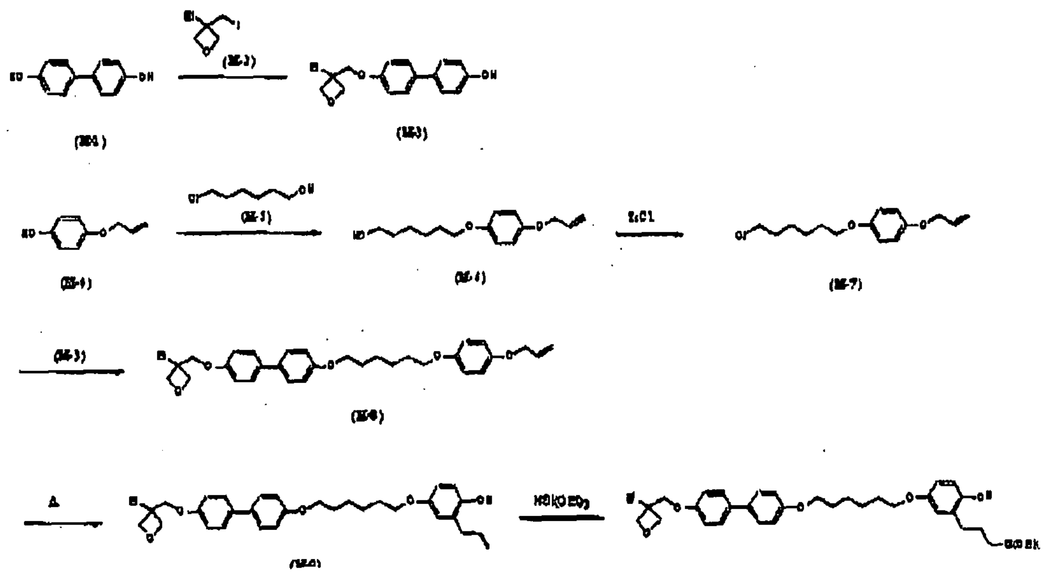

Production of (M-3):

A compound (M-1) (42 g) and a compound (M-2) (51.5 g) were dissolved in 500 ml of dimethylacetamide, and potassium carbonate (31.5 g) was added to it. The reaction solution was stirred at 100°C for 5 hours, then cooled to room temperature, and poured into water, and the deposited crystal was taken out through filtration. Thus obtained, the crude crystal was recrystallized from acetonitrile, and 33 g of (M-3) was obtained.

Production of (M-6):

A compound (M-4) (15 g) was dissolved in 150 ml of dimethylacetamide, and potassium carbonate (30 g) and potassium iodide (18 g) were added to it. Then, (M-5) (15 g) was added to it. The reaction solution was stirred at 100°C for 5 hours, cooled to room temperature, and poured into water, and the deposited crystal was taken out through filtration. Thus obtained, the crude crystal was recrystallized from hexane, and 17 g of (M-6) was obtained.

Production of (M-7):

Thus obtained, (M-6) (12.5 g) was dissolved in 60 ml of acetonitrile, and pyridine (13 m-1) was added to it and heated with stirring under reflux. After the reaction, water was added to it, and the organic substance was extracted out with ethyl acetate. The organic phase was dried with sodium sulfate, the solvent was evaporated away, and the residue was purified through silica gel column chromatography to obtain (M-7) (10.1 g) .

Production of (M-8) :

Thus obtained, (M-7) (10.1 g) and (M-3) (10.7 g) were dissolved in 100 ml of dimethylacetamide, and potassium carbonate (5.2 g) was added to it. The reaction solution was stirred at 100°C for 5 hours, cooled to room temperature, and poured into water, and the organic substance was extracted out with ethyl acetate. The organic phase was dried with sodium sulfate, the solvent was evaporated away, and the residue was purified through silica gel column chromatography to obtain (M-8). (10.0 g).

Production of (M-9):

Thus obtained, (M-8) (10.0 g) was heated in a nitrogen flow at 200°C. After 5 hours, this was cooled to room temperature, and the residue was purified through silica gel column chromatography to obtain 8.3 g of (M-9).

Production of (A-1) :

(M-9) (8.3 g) and triethoxysilane (4.2 g) were dissolved in 10 ml of toluene, and a solution prepared by dissolving 15 mg of chloroplatinic acid in 0.5 ml of benzonitrile was dropwise added to it in a nitrogen flow at 80°C. The reaction solution was reacted at 80°C for 1 hour, and the reaction mixture was concentrated and purified through silica gel column chromatography to obtain 4.3 g of (A-1) (colorless viscous liquid).

Example of Producing Compound (A-10):

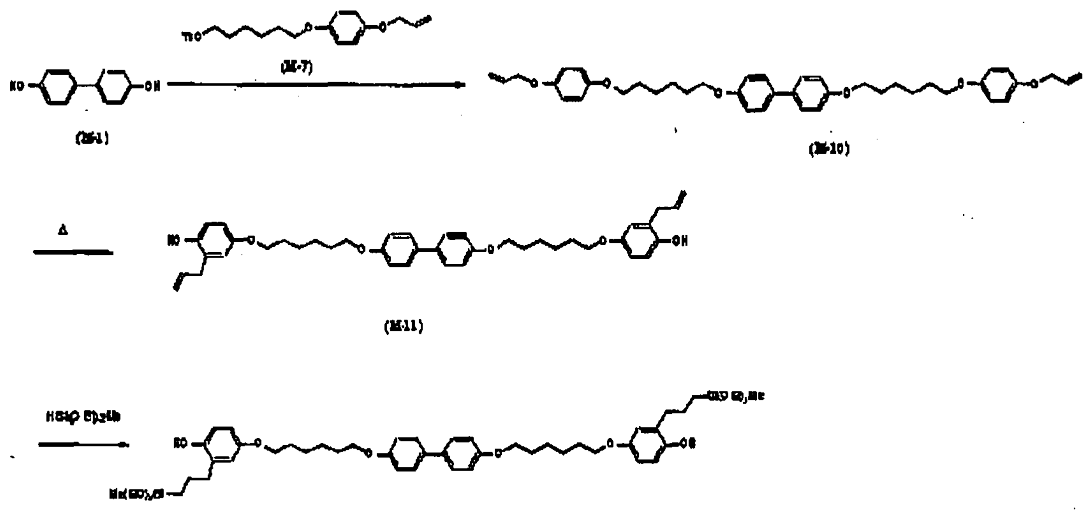

(M-1)
(M-10)
(M-11)

Production of (M-10):

A compound (M-1) (3.7 g) and a compound (M-7) (17 g) were dissolved in 100 ml of dimethylacetamide, and potassium carbonate (6 g) was added to it. The reaction solution was stirred at 100°C for 5 hours, then cooled to room temperature, and poured into water, and the organic substance was extracted out with ethyl acetate. The organic phase was dried with sodium sulfate, the solvent was evaporated away, and the residue was purified through silica gel column chromatography to obtain (M-10) (10.6 g) .

Production of (M-11) :

In a nitrogen flow, a mixture of (M-10) (10 g) obtained herein and 10 ml of decahydronaphthalene was heated under reflux. After 5 hours, this was cooled to room temperature, hexane was added to the reaction mixture, and the solid was taken out through filtration. The resulting solid was purified through silica gel column chromatography to obtain 8.5 g of (M-11) .

Production of (A-10) :

(M-11) (8.5 g) obtained herein and diethoxymethylsilane (7.0 g) were dissolved in 20 ml of toluene, and a solution prepared by dissolving 30 mg of chloroplatinic acid in 1 ml of benzonitrile was dropwise added to it in a nitrogen flow at 80°C. The reaction solution was reacted at 80°C for 1 hour, and the reaction mixture was concentrated and purified through silica gel column chromatography to obtain 4.8 g of (A-10) (colorless viscous liquid).

[1-2] Introduction of Sulfo Group:

Preferably, a sulfo group is introduced into the proton conductor of the invention, for which the organosilicon compound of formula (I) or (II) is reacted with a sulfonating agent before or after the sol-gel reaction to be mentioned below, or after the film formation. The method including sol-gel reaction after sulfonation as referred to herein is meant to include both a case of sol-gel reaction to be effected just after sulfonation and a case of sol-gel reaction to be effected

after sulfonation via some operation (reaction or working step). Similarly, the method including sulfonation after sol-gel reaction is meant to include both a case of sulfonation to be effected just after sol-gel reaction and a case of sulfonation to be effected after sol-gel reaction via some operation (reaction or working step).

The sulfonating agent acts on the (hetero) arylene group, $Ar^1$ or $Ar^2$ in formula (I) or (II), directly or via the substituent of the group, and a sulfo group is thereby introduced into the compound.

For the sulfonating agent, for example, herein usable are those described in *New Experimental Chemistry Lecture,* Vol. 14, 3rd. Ed., Synthesis and Reaction of Organic Compound (edited by the Chemical Society of Japan). Preferred example of the sulfonating agent for use herein are sulfuric acid, chlorosulfonic acid, fuming sulfuric acid, amidosulfuric acid, sulfur trioxide, sulfur trioxide complexes (e.g., $SO_3$-DMF, $SO_3$-THF, $SO_3$-dioxane, $SO_3$-pyridine) . More preferred examples are chlorosulfonic acid and sulfur trioxide complexes; and even more preferred are sulfur trioxide complexes.

[2] Method for Forming Proton Conductor:

[2-1] Sol-Gel Process:

In the invention, generally employed is a sol-gel process that includes metal alkoxide hydrolysis, condensation and drying (optionally firing) to give a solid. For example, herein employable are the methods described in Patent References 1 and 2 and Non-Patent References 1 and 2. An acid catalyst is generally used for condensation. However, in the invention, the precursor after sulfonation described in [1-1] may serve as an acid catalyst, and the reaction does not require any additional acid to be added thereto.

One typical method of forming the proton conductor of the invention includes dissolving a compound of formula (I) or (II) in a solvent (e.g., DMF, THF, dioxane, methylene chloride, diethyl ether) and reacting it with a sulfonating agent. After the sulfonation, this is subjected to alkoxysilyl group hydrolysis and polycondensation (this is hereinafter referred to as "sol-gel" reaction). In these reactions, the system may be heated, if desired. The viscosity of the reaction mixture (sol) gradually increases, and after the solvent is evaporated away and the remaining sol is dried, then a solid (gel) is obtained. While fluid, the sol may be cast into a desired vessel or applied onto a substrate, and thereafter the solvent is evaporated away and the remaining sol is dried to give a solid membrane. For further densifying the silica network formed therein, the membrane may be optionally heated after dried if desired. The product obtained by dissolving a compound of formula (I) or (II) in a solvent followed by subjecting it to sol-gel reaction may be treated with a sulfonating agent to thereby introduce a sulfo group into it, and a membrane may be formed in that manner.

The solvent for the sol-gel reaction is not specifically defined so far as it dissolves the precursor, organosilicon compound. For it, however, preferred are carbonate compounds (e.g., ethylene carbonate, propylene carbonate), heterocyclic compounds (e.g., 3-methyl-2-oxazolidinone, N-methylpyrrolidone), cyclic ethers (e.g., dioxane, tetrahydrofuran), linear ethers (e.g., diethyl ether, ethylene glycol dialkyl ether, propylene glycol dialkyl ether, polyethylene glycol dialkyl ether, polypropylene glycol dialkyl ether), alcohols (e.g., methanol, ethanol, isopropanol, ethylene glycol monoalkyl ether, propylene glycol monoalkyl ether, polyethylene glycol monoalkyl ether, polypropylene glycol monoalkyl ether), polyalcohols (e.g., ethylene glycol, propylene glycol, polyethylene glycol, polypropylene glycol, glycerin), nitrile compounds (e.g., acetonitrile, glutarodinitrile, methoxyacetonitrile, propionitrile, benzonitrile), esters (e.g., carboxylates, phosphates, phosphonates), aprotic polar substances (e.g., dimethylsulfoxide, sulforane, dimethylformamide, dimethylacetamide), non-polar solvents (e.g., toluene, xylene), chlorine-containing solvents (e.g., methylene chloride, ethylene chloride), water, etc. Above all, especially preferred are alcohols such as ethanol, isopropanol, fluoroalcohols; nitrile compounds such as acetonitrile, glutarodinitrile, methoxyacetonitrile, propionitrile, benzonitrile; and cyclic ethers such as dioxane, tetrahydrofuran. One or more of these may be used herein either singly or as combined. For controlling the drying speed, a solvent having a boiling point of not lower than 100°C, such as N-methylpyrrolidone, dimethylacetamide, sulforane or dioxane, may be added to the above-mentioned solvent. The total amount of the solvent is preferably from 0.1 to 100 g, more preferably from 1 to 10 g, per gram of the precursor compound.

For promoting the sol-gel reaction, an acid catalyst may be used. Preferably, the acid catalyst is an inorganic or organic proton acid. The inorganic proton acid includes, for example, hydrochloric acid, sulfuric acid, phosphoric acids (e.g., $H_3PO_4$, $H_3PO_3$, $H_4P_2O_7$, $H_5P_3O_{10}$, metaphosphoric acid, hexafluorophosphoric acid), boric acid, nitric acid, perchloric acid, tetrafluoroboric acid, hexafluoroarsenic acid, hydrobromic acid, solid acids (e.g., tungstophosphoric acid, tungsten-peroxo complex). For the organic proton acid, for example, usable are low-molecular compounds such as phosphates (for example, those with from 1 to 30 carbon atoms, such as methyl phosphate, propyl phosphate, dodecyl phosphate, phenyl phosphate, dimethyl phosphate, didodecyl phosphate), phosphites (for example, those with from 1 to 30 carbon atoms, such as methyl phosphite, dodecyl phosphite, diethyl phosphite, diisopropyl phosphite, didodecyl phosphite), sulfonic acids (for example, those with from 1 to 15 carbon atoms, such as benzenesulfonic acid, toluenesulfonic acid, hexafluorobenzenesulfonic acid, trifluoromethanesulfonic acid, dodecylsulfonic acid), carboxylic acids (for example, those with from 1 to 15 carbon atoms, such as acetic acid, trifluoroacetic acid, benzoic acid, substituted benzoic acids), imides (e.g., bis(trifluoromethanesulfonyl)imido acid, trifluoromethanesulfonyltrifluoroacetamide), phosphonic acids (for example, those with from 1 to 30 carbon atoms, such as methylphosphonic acid, ethylphosphonic acid, phenylphosphonic acid, diphenylphosphonic acid, 1,5-naphthalenebisphosphonic acid); and proton acid segment-having high-molecular compounds, for example, perfluorocarbonsulfonic acid polymers such as typically Nafion®, poly(meth)acrylates having a phosphoric acid group in side branches (JP-A 2001-114834), and sulfonated, heat-resiatant aromatic polymers such as sulfonated polyether-ether ketones (JP-A 6-93111), sulfonated polyether sulfones (JP-A 10-45913), sulfonated polysulfones (JP-A 9-245818) . Two or more of these may be used herein, as combined.

The reaction temperature in the sol-gel reaction is associated with the reaction speed, and it may be suitably determined depending on the reactivity of the precursor to be reacted and on the type and the amount of the acid used. Preferably, it falls between -20°C and 150°C, more preferably between 0°C and 80°C, even more preferably between 20°C and 60°C. [2-2] Polymerization of Polymerizable Group $Y^1$:

When the polymerizable group $Y^1$ is a carbon-carbon unsaturated bond-having group, for example, a (meth) acryloyl, vinyl or ethynyl group, then radical polymerization for ordinary polymer production may apply to the case. The process is described in Takayuki Ohtsu & Masaetsu Kinoshita, *Experimental Process for Polymer Production* (by Kagaku Dojin), and Takayuki Ohtsu, *Lecture of Polymerization Theory 1,* Radical Polymerization (1) (by Kagaku Dojin).

The radical polymerization includes thermal polymerization with a thermal polymerization initiator and photopolymerization with a photopolymerization initiator. Preferred examples of the thermal polymerization initiator are azo-type initiators such as 2,2'-azobis(isobutyronitrile), 2,2'-azobis(2,4-dimethylvaleronitrile), dimethyl 2,2'-azobis (2-methylpropionate); and peroxide-type initiators such as benzoyl peroxide. Preferred examples of the photopolymerization initiator are α-carbonyl compounds (USP 2,367,661 and 2,367,670), acyloin ethers (USP 244,828), α-hydrocarbon-substituted aromatic acyloin compounds (USP 2,722,512), polynuclear quinone compounds (USP 3,046,127 and 2,951,758), combinations of triarylimidazole dimer and p-aminophenyl ketone (USP 35, 493, 676), acridine and phenazine compounds (JP-A 60-105667, USP 4,239,850), and oxadiazole compounds (USP 4,212,970).

The polymerization initiator may be added to the reaction system before the start of the sol-gel reaction in the above [2-1], or may be added to the reaction product after the sol-gel reaction and immediately before the application of the reaction product to substrates. Preferably, the amount of the polymerization initiator to be added is from 0.01 to 20 % by mass, more preferably from 0.1 to 10 % by mass relative to the total amount of the monomers.

When the polymerizable group $Y^1$ is an alkylene oxide group such as ethylene oxide or trimethylene oxide, then the polymerization catalyst to be used in the case may be a proton acid (as in the above [2-1]), or a Lewis acid (preferably, boron trifluoride (including its ether complex), zinc chloride, aluminium chloride) . In case where the proton acid used in the sol-gel reaction serves also as the polymerization catalyst, then it does not require any additional proton acid specifically for the polymerization of the polymerizable group $Y^1$. When used, the polymerization catalyst is preferably added to the reaction product just before the product is applied to substrates. In general, the polymerization is promoted in the membrane being formed on substrates through exposure of the membrane to heat or light. With that, the molecular orientation in the membrane is fixed and the membrane strength is thereby enhanced.

[2-3] Combination with Other Silicon Compound:

If desired, two or more precursors described in the above [1-1] may be mixed for use herein for improving the properties of the membranes formed. Optionally, any other silicon compound may be further added to these precursors. Examples of the additional silicon compound are organosilicon compounds of the following formula (IV), and their polymers.

(IV) $(R^5)_{m4}$ -Si - $(OR^6)_{4-m4}$

wherein $R^5$ represents a substituted or unsubstituted alkyl, aryl or heterocyclic group; $R^6$ represents a hydrogen atom, an alkyl group, an aryl group, or a silyl group; m4 indicates an integer of from 0 to 4; when m4 or (4-m4) is 2 or more, then $R^5$'s or $R^6$'s may be the same or different, and $R^5$'s or $R^6$'s may bond to each other to form a ring. The compounds of formula (IV) may bond to each other at $R^5$ or at the substituent on $R^5$ to form polymers.

In formula (IV), m4 is preferably from 0 to 2, and $R^6$ is preferably an alkyl group. Examples of preferred compounds where m4 is 0 are tetramethoxysilane (TMOS) and tetraethoxysilane (TEOS) . Examples of preferred compounds where m4 is 1 or 2 are mentioned below.

(IV-1) n-$C_3H_7$-SI-$(OEt)_3$

(IV-2) $n\text{-}C_6H_{13}\text{-}Si\text{-}(OEt)_3$

(IV-3) 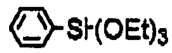

(IV-4) 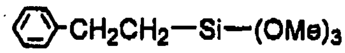

(IV-5) $(EtO)_3\text{-}Si\text{-}(CH_2)_8\text{-}Si\text{-}(OEt)_3$

(IV-6) $Me(EtO)_2\text{-}Si\text{-}(CH_2)_8\text{-}Si\text{-}(OEt)_2Me$

(IV-7) 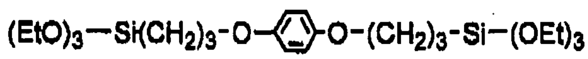

(IV-8) 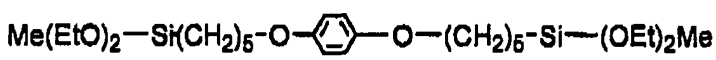

(IV-9) $(EtO)_3\text{-}Si\text{-}(CH_2)_3\text{-}NHCOO\text{-}(CH_2CH_2O)_3CONH\text{-}(CH_2)_3Si\text{-}(OEt)_3$

(IV-10) 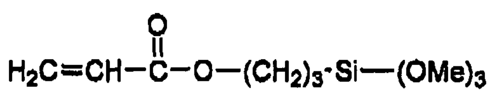

(IV-11) 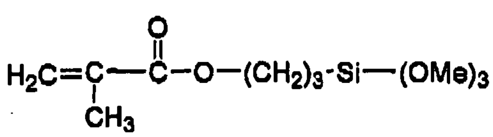

(IV-12) 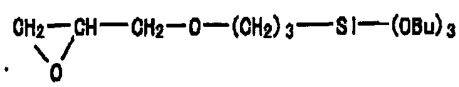

(IV-13) 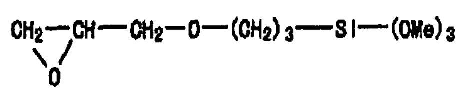

(IV-14)

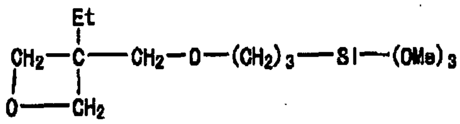

(IV-15)

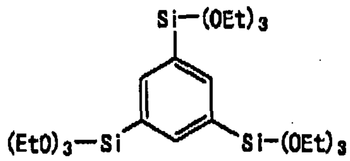

(IV-16)

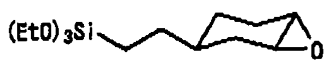

When the compound of formula (IV) is combined with the organosilicon compound precursor, then its amount is preferably from 1 to 50 mol%, more preferably from 1 to 20 mol% of the precursor.

[2-4] Addition of Polymer Compound:

The proton conductor of the invention may contain various polymer compounds for the purpose of (1) enhancing the mechanical strength of the membrane, and (2) increasing the acid concentration in the membrane. (1) For enhancing the mechanical strength of the membrane, preferably added thereto is a polymer compound having a molecular weight of from 10,000 to 1,000,000 or so and well compatible with the proton-conductive material of the invention. For example, the polymer compound includes perfluoropolymer, polystyrene, polyethylene glycol, polyoxetane, poly (meth)acrylate, polyether ketone, polyether sulfone and their copolymers. Preferably, the polymer content of the membrane is from 1 to 30 % by mass. (2) For increasing the acid concentration in the membrane, preferably used herein are proton acid segment-having polymer compounds, for example, perfluorocarbonsulfonic acid polymers such as typically Nafion®, poly (meth) acrylates having a phosphoric acid group in the side branches, and sulfonated, heat-resistant aromatic polymers such as sulfonated polyether-ether ketones, sulfonated polyether sulfones, sulfonated polysulfones, sulfonated polybenzimidazoles. The content of the polymer compound in the membrane is preferably from 1 to 30 % by mass.

The sol-gel reaction of the organosilicon compound precursor goes on while the organic site of the organosilicon compound is oriented after the sol-gel reaction mixture that contains the precursor is applied onto a substrate. To promote the orientation of the sol-gel composition, various methods may be employed. For example, supports such as those mentioned above may be previously oriented. The orientation may be effected in any ordinary method. Preferably, an orientable liquid-crystal layer of, for example, various orientable polyimide films or polyvinylalcohol films is formed on a support, and rubbed for orientation; or the sol-gel composition applied on a support is put in a magnetic field or an electric field, or it is heated.

Regarding the orientation condition of the organic-inorganic hybrid proton conductor, it is confirmed through observation with a polarizing microscope that the membrane is optically anisotropic. The direction in which the membrane sample is observed may be any one, not specifically defined. For example, when the sample rotated in a cross-Nicol condition gives changing dark and light shadows, then it can be said that the sample is anisotropic. The orientation condition of the membrane is not specifically defined provided that the membrane shows anisotropy. When a texture that can be recognized as a liquid-crystal phase is observed in the membrane sample, then the phase may be specifically identified. In this case, the phase may be any of a lyotropic liquid-crystal phase or a thermotropic liquid-crystal phase. Regarding its orientation condition, the lyotropic liquid-crystal phase is preferably a hexagonal phase,

a cubic phase, a lamella phase, a sponge phase or a micelle phase. Especially at room temperature, preferred is a lamella phase or a sponge phase. The thermotropic liquid-crystal phase is preferably any of a nematic phase, a smectic phase, a crystal phase, a columnar phase and a cholesteric phase. Especially at room temperature, preferred are a smectic phase and a crystal phase. Also preferably, these phases may be oriented and fixed in solid. Anisotropy as referred to herein means that the directional vector of molecules is not isotropic.

The thickness of the organic-inorganic hybrid proton conductor that is obtained by peeling it from the support is preferably from 10 to 500 μm, more preferably from 25 to 100 μm.

[2-5] Method of Film Formation:

The supports to which the sol-gel reaction mixture is applied in the invention are not specifically defined, and their preferred examples are glass substrates, metal substrates, polymer films and reflectors. Examples of the polymer films are cellulose polymer films of TAC (triacetyl cellulose), ester polymer films of PET (polyethylene terephthalate) or PEN (polyethylene naphthalate), fluoropolymer films of PTFE (polytrifluoroethylene), and polyimide films. Any known method of, for example, curtain coating, extrusion coating, roll coating, spin coating, dipping, bar coating, spraying, slide coating or printing is herein employable for applying the sol-gel reaction mixture to the supports.

[2-6] Filling to Porous Membrane:

The proton-conductive material of the invention may be infiltrated into the pores of a porous substrate to form a film. The sol-gel reaction solution of the invention is applied to a porous substrate so that it is infiltrated into the pores of the substrate, or such a porous substrate is dipped in the sol-gel reaction solution to thereby fill the pores with the proton-conductive material to form a film. Preferred examples of such a porous substrate are porous polypropylene, porous polytetrafluoroethylene, porous crosslinked heat-resistant polyethylene and porous polyimide films.

[2-7] Addition of Catalyst Metal to Proton Conductor:

An active metal catalyst may be added to the proton conductor of the invention for promoting the redox reaction of anode fuel and cathode fuel. The fuel having penetrated into the proton conductor that contains the catalyst may be well consumed inside the proton conductor, not reaching any other electrode, and this is effective for preventing crossover. The active metal for the catalyst is not specifically defined provided that it functions as an electrode catalyst. For it, for example, suitable is platinum or platinum-based alloy.

[3] Fuel cell:

[3-1] Cell structure:

A fuel cell is described, which includes the organic-inorganic hybrid proton conductor of the invention. Fig. 1 shows the constitution of a membrane electrode assembly (hereinafter referred to as "MEA") 10 for fuel cells. The MEA 10 has a proton conductor 11, and an anode 12 and a cathode 13 that are opposite to each other via the conductor 11.

The anode 12 and the cathode 13 include a porous conductive sheet (e.g., carbon paper) 12a, 13a, and a catalyst layer 12b, 13b. The catalyst layer 12b, 13b is formed of a dispersion of carbon particles (e.g., ketjen black, acetylene black, carbon nanotubes) that carry a catalyst metal such as platinum particles thereon, in a proton-conductive material (e. g., Nafion) . For airtightly adhering the catalyst layer 12b, 13b to the proton conductor 11, generally employed is a method of hot-pressing the porous conductive sheet 12a, 13a coated with the catalyst layer 12b, 13b, against the proton conductor 11 (preferably at 120 to 130°C under 2 to 100 kg/cm$^2$) ; or a method of pressing the catalyst layer 12b, 13b formed on a suitable support, against the proton conductor 11 while transferring the layer onto the membrane, followed by making the resulting laminate structure sandwiched between the porous conductive sheets 12a, 13a.

Fig. 2 shows one example of a fuel cell. The fuel cell has the MEA 10, a pair of separators 21, 22 between which the MEA 10 is sandwiched, and a collector 17 of a stainless net and a gasket 14 both fitted to the separators 21, 22. The anode-side separator 21 has an anode-side opening 15 formed through it; and the cathode-side separator 22 has a cathode-side opening 16 formed through it. Vapor fuel such as hydrogen or alcohol (e.g., methanol) or liquid fuel such as aqueous alcohol solution is fed to the cell via the anode-side opening 15; and an oxidizing gas such as oxygen gas or air is fed thereto via the cathode-side opening 16.

[3-2] Catalyst Material:

For the anode and the cathode, for example, a catalyst that carries active metal particles of platinum or the like on a carbon material may be used. The particle size of the active metal particles that are generally used in the art is from 2 to 10 nm. Active metal particles having a smaller particle size may have a larger surface area per the unit mass thereof, and are therefore more advantageous since their activity is higher. If too small, however, the particles are difficult to disperse with no aggregation, and it is said that the lowermost limit of the particle size will be 2 nm or so.
In hydrogen-oxygen fuel cells, the active polarization of cathode (air electrode) is higher than that of anode (hydrogen electrode). This is because the cathode reaction (oxygen reduction) is slow as compared with the anode reaction. For enhancing the oxygen electrode activity, usable are various platinum-based binary alloys such as Pt-Cr, Pt-Ni, Pt-Co, Pt-Cu, Pt-Fe. In a direct methanol fuel cell in which aqueous methanol is used for the anode fuel, it is a matter of importance that the catalyst poisoning with CO that is formed during methanol oxidation must be inhibited. For this purpose, usable are platinum-based binary alloys such as Pt-Ru, Pt-Fe, Pt-Ni, Pt-Co, Pt-Mo, and platinum-based ternary alloys such as Pt-Ru-Mo, Pt-Ru-W, Pt-Ru-Co, Pt-Ru-Fe, Pt-Ru-Ni, Pt-Ru-Cu, Pt-Ru-Sn, Pt-Ru-Au.
For the carbon material that carries the active metal thereon, preferred are acetylene black, Vulcan XC-72, ketjen black, carbon nanohorns (CNH), carbon nanotubes (CNT).

[3-3] Constitution and Material of Catalyst Layer:

The function of the catalyst layer includes (1) transporting fuel to active metal, (2) providing the reaction site for oxidation of fuel (anode) and for reduction thereof (cathode), (3) transmitting the electrons formed through the redox reaction to collector, and (4) transporting the protons formed through the reaction to proton conductor. For (1), the catalyst layer must be porous so that liquid and vapor fuel may penetrate into the depth thereof. The active metal catalyst mentioned in [3-2] acts for (2) ; and the carbon material also mentioned in [3-2] acts for (3). For attaining the function of (4), the catalyst layer shall contain a proton-conductive material added thereto.
The proton-conductive material to be in the catalyst layer is not specifically defined provided that it is a solid that has a proton-donating group. For it, for example, preferred are acid reside-having polymer compounds that are used for proton conductor (e.g., perfluorocarbonsulfonic acids such as typically Nafion; phosphoric acid-branched poly (meth)acrylates; sulfonated, heat-resistant aromatic polymers such as sulfonated polyether-ether ketones, sulfonated polybenzimidazoles), and acid-fixed organic-inorganic hybrid proton-conductive materials (e.g., proton-conductive materials as in the above-mentioned Patent References 1 and 2, and Non-Patent References 1 and 2) . As the case may be, the proton-conductive material that is obtained through sol-gel reaction of the precursor (compound of formula (I)) for the proton conductor of the invention may also be used for the catalyst layer. This is favorable, since the proton conductor and the catalyst layer are formed of a material of the same type, the adhesiveness between the proton conductor and the catalyst layer is high.
The amount of the active metal to be used herein is preferably from 0.03 to 10 mg/cm$^2$ from the viewpoint of the cell output and from the economical viewpoint. The amount of the carbon material that carries the active metal is preferably from 1 to 10 times the mass of the active metal. The amount of the proton-conductive material is preferably from 0.1 to 0.7 times the mass of the active metal-carrying carbon.

[3-4] Porous Conductive Sheet (electrode substrate):

The porous conductive sheet may be referred to as an electrode substrate, a diffusive layer or a lining material, and it acts as a collector and also acts to prevent water from staying therein to worsen vapor diffusion. In general, carbon paper or carbon cloth may be used for the sheet. If desired, the sheet may be processed with PTFE so as to be repellent to water.

[3-5] Formation of MEA (membrane electrode assembly):

For forming MEA, preferred are the following four methods:
Proton conductor coating method: A catalyst paste (ink) that has basic ingredients of active metal-carrying carbon, proton-conductive material and solvent is directly applied onto both sides of a proton conductor, and a porous conductive sheet is (thermally) adhered under pressure thereto to construct a 5-layered MEA.
Porous conductive sheet coating method: The catalyst paste is applied onto the surface of a porous conductive sheet to form a catalyst layer thereon, and a proton conductor is adhered thereto under pressure to construct a 5-layered MEA.
Decal method: The catalyst paste is applied onto PTFE to form a catalyst layer thereon, and the catalyst layer alone is transferred to a proton conductor to construct a 3-layered MEA. A porous conductive sheet is adhered thereto

under pressure to construct a 5-layered MEA.

Catalyst post-carrying method: Ink prepared by mixing a platinum powder-uncarrying carbon material and a proton-conductive material is applied onto a proton conductor, a porous conductive sheet or PTFE to form a film, and platinum ions are infiltrated into the film and platinum particles are precipitated in the film through reduction to thereby form a catalyst layer. After the catalyst layer is formed, the catalyst layer alone is transferred onto a proton conductor to construct a 3-layered MAE, and a porous conductive sheet is adhered thereto under pressure to construct a 5-layered MEA. [3-6] Fuel and Method of Fuel Supply:

Fuel for fuel cells that include a solid polymer membrane is described. For anode fuel, usable are hydrogen, alcohols (e.g., methanol, isopropanol, ethylene glycol), ethers (e.g., dimethyl ether, dimethoxymethane, trimethoxymethane), formic acid, boron hydride complexes, ascorbic acid, etc. For cathode fuel, usable are oxygen (including oxygen in air), hydrogen peroxide, etc.

In direct methanol fuel cells, the anode fuel may be aqueous methanol having a methanol concentration of from 3 to 64 % by mass. As in the anode reaction formula ($CH_3OH + H_2O \rightarrow CO_2 + 6H^+ + 6e$), 1 mol of methanol requires 1 mol of water, and the methanol concentration in the case corresponds to 64 % by mass. A higher methanol concentration in fuel is more effective for reducing the mass and the volume of the cell including the fuel tank of the same energy capacity. However, if the methanol concentration is too high, then much methanol may penetrate through the proton conductor to reach the cathode on which it reacts with oxygen to lower the voltage. This is a crossover phenomenon. When the methanol concentration is too high, then the crossover phenomenon is remarkable and the cell output lowers. To that effect, the optimum concentration of methanol shall be determined, depending on the methanol perviousness through the proton conductor used. The cathode reaction formula in direct methanol fuel cells is ($3/2\ O_2 + 6H^+ + 6e \rightarrow H_2O$), and oxygen (generally, oxygen in air) is used for the fuel in the cells.

For supplying the anode fuel and the cathode fuel to the respective catalyst layers, for example, employable are two methods, (1) a method of forcedly circulating the fuel by the use of an auxiliary device such as pump (active method), and (2) a method not using such an auxiliary device (for example, liquid fuel is supplied through capillarity or by spontaneously dropping it, and vapor fuel is supplied by exposing the catalyst layer to air - passive method) . If desired, these methods may be combined for anode and cathode. The method (1) has some advantages in that water formed in the cathode area is circulated, and high-concentration methanol is usable as fuel, and that air supply enables high output from the cells. However, this is problematic in that the necessary fuel supply unit will make it difficult to down-size the cells. On the other hand, the advantage of the method (2) is that it may make it possible to down-size the cells, but the disadvantage thereof is that the fuel supply rate is readily limited and high output from the cells is often difficult.

[3-7] Cell Stacking:

The unit cell voltage of fuel cells is generally at most 1 V. Therefore, it is desirable that many cells are stacked up in series, depending on the necessary voltage for load. For cell stacking, for example, employable are a method of "plane stacking" that comprises placing unit cells on a plane, and a method of "bipolar stacking" that comprises stacking up unit cells via a separator with a fuel pathway formed on both sides thereof. In the plane stacking, the cathode (air electrode) is on the surface of the stacked structure and it may readily take air thereinto. In this, since the stacked structure may be thinned, it is more favorable for small-sized fuel cells. Apart from these, MEMS may be employed, in which a silicon wafer is processed to form a micropattern and fuel cells are stacked on it.

[4] Fuel Cell Applications:

Fuel cells may have many applications, for example, for automobiles, electric and electronic appliances for household use, mobile devices, portable devices, etc. In particular, direct methanol fuel cells may be down-sized, the weight thereof may be reduced and they do not require charging. Having such many advantages, therefore, they are expected to be used for various energy sources for mobile appliances and portable appliances. For example, mobile appliances in which fuel cells are favorably used include mobile phones, mobile notebook-size personal computers, electronic still cameras, PDA, video cameras, mobile game drivers, mobile servers, wearable personal computers, mobile displays; and portable appliances in which fuel cells are favorably used include portable generators, outdoor lighting devices, pocket lamps, electrically-powered (or assisted) bicycles, etc. In addition, fuel cells are also favorable for power sources for robots for industrial and household use and for other toys. Moreover, they are further usable as power sources for charging secondary batteries that are mounted on these appliances.

EXAMPLES

The invention is described more concretely with reference to the following Examples. The materials, their

amount and proportion, the processing modes and the processing orders may be varied and changed in any desired manner, not overstepping the scope and the gist of the invention. Accordingly, the invention should not be limited to the following Examples.

Example 1: Formation of Proton Conductor

(1) Formation of proton conductor (E-1):

$SO_3$-DMF complex (from Aldrich) (0.32 g) was added to a solution of dimethylacetamide (DMAC) (2.5 ml) with A-1 (0.50 g) dissolved therein, and reacted at room temperature for 12 hours. Next, water (114 μl) was added to it, and stirred under heat at 60°C for 5 hours (SOL-1). The resulting mixture was cast on a Teflon sheet (Teflon is a registered trade mark, and the same shall apply hereinunder), and left as such for 72 hours. Thus solidified, the coating film was peeled from the Teflon sheet, and washed with water. After dried, the film thus formed had a thickness of 153 μm. Observed with a polarizing microscope, optically-anisotropic fine domains were found in the film. This confirms that the film includes aggregates of A-1 with its mesogen moieties aligned in a predetermined direction.

(2) Formation of proton conductor (E-2):

$SO_3$-DMF complex (from Aldrich) (0.32 g) was added to a solution of DMAC (2.5 ml) with A-7 (0.50 g) dissolved therein, and reacted at room temperature for 12 hours. Next, water (114 μl) was added to it, and stirred under heat at 60°C for 5 hours. The resulting mixture was cast on a Teflon sheet, and left as such for 72 hours. Thus solidified, the coating film was peeled from the Teflon sheet, and washed with water. After dried, the film thus formed had a thickness of 163 μm. Observed with a polarizing microscope, optically-anisotropic fine domains were found in the film. This confirms that the film includes aggregates of A-7 with its mesogen moieties aligned in a predetermined direction.

(3) Formation of proton conductor (E-3):

$SO_3$-DMF complex (from Aldrich) (0.26 g) was added to a solution of DMF (2.5 ml) with A-9 (0.5 g) dissolved therein, and reacted at room temperature for 12 hours. Next, water (92 μl) was added to it, and stirred under heat at 60°C for 4 hours. The resulting mixture was cast on a Teflon sheet, and left as such for 72 hours. Thus solidified, the coating film was peeled from the Teflon sheet, and washed with water. After dried, the film thus formed had a thickness of 160 μm. Observed with a polarizing microscope, optically-anisotropic fine domains were found in the film. This confirms that the film includes aggregates of A-9 with its mesogen moieties aligned in a predetermined direction.

(4) Formation of proton conductor (E-4):

$SO_3$-DMF complex (from Aldrich) (0.25 g) was added to a solution of DMF (2.5 ml) with A-10 (0.5 g) dissolved therein, and reacted at room temperature for 12 hours. Next, water (88 μl) was added to it, and stirred under heat at 50°C for 7 hours. The resulting mixture was cast on a Teflon sheet, and left as such for 72 hours. Thus solidified, the coating film was peeled from the Teflon sheet, and washed with water. After dried, the film thus formed had a thickness of 163 μm. Observed with a polarizing microscope, optically-anisotropic fine domains were found in the film. This confirms that the film includes aggregates of A-10 with its mesogen moieties aligned in a predetermined direction.

(5) Formation of proton conductor (E-5) :

$SO_3$-DMF complex (from Aldrich) (0.32 g) was added to a solution of DMF (2.5 ml) with A-1 (0.45 g) and A-2 (0.05 g) dissolved therein, and reacted at room temperature for 12 hours. Next, water (111 μl) was added to it, and stirred under heat at 50°C for 5 hours. The resulting mixture was cast on a Teflon sheet, and left as such for 72 hours. Thus solidified, the coating film was peeled from the Teflon sheet, and washed with water. After dried, the film thus formed had a thickness of 150 μm. Observed with a polarizing microscope, optically-anisotropic fine domains were found in the film. This confirms that the film includes aggregates of A-1 and A-2 with their mesogen moieties aligned in a predetermined direction.

(6) Formation of proton conductor (R-1) :

A solution prepared by dissolving liquid $SO_3$ (80 mg) in 0.2 ml of methylene chloride was dropwise added to a solution of IV-3 (0.24 g) in methylene chloride (0.5 ml). This was reacted at room temperature for 5 hours and then the solvent was evaporated away. An ethanol solution of IV-13 (0.24 g) and water were added to the resulting residue,

and stirred at 60°C for 4 hours. The resulting mixture was cast on a Teflon sheet, and left as such for 24 hours. Thus solidified, the coating film was peeled from the Teflon sheet, and washed with water. After dried, the film thus formed had a thickness of 130 µm. Observed with a polarizing microscope, optically-anisotropic fine domains were not found in the film.

Example 2 - Resistance to Aqueous Methanol Solution:

Circular discs having a diameter of 13 mm were blanked out of the thus-obtained, proton conductors (E-1 to E-5) and comparative proton conductor (R-1) prepared in Example 1 and out of Nafion 117 (from DuPont) (R-2) to use as samples. These samples were separately dipped in 5 ml of an aqueous 10 mas.% methanol solution for 48 hours. The proton conductors of the invention (E-1 to E-5) swelled little, and their shape and strength did not change from those of the non-dipped samples. However, the comparative sample (R-1) cracked. Nafion 117 (r-2) swelled by about 70 % by mass, and its film shape changed.

From the above, it is understood that the proton conductors of the invention are sufficiently resistant to aqueous methanol solution that serves as fuel in direct methanol fuel cells.

Example 3 - Determination of Methanol Perviousness:

Circular discs having a diameter of 13 mm were blanked out of the thus-obtained, proton conductors (E-1 to E-5) and comparative proton conductor (R-1) prepared in Example 1 and out of Nafion 117 (from DuPont) (R-2) to use as samples. Concretely, as in Fig. 3, the circular disc sample having a diameter of 13 mm (proton conductor 31) was reinforced with a Teflon tape having a circular hole (diameter, 5 mm) formed therein (32) . The reinforced membrane was fitted to a stainless cell as in Fig. 3, and aqueous methanol solution was put into the upper space above the membrane (33), and a hydrogen gas was fed thereinto through a lower gas inlet mouth at a constant flow rate (34). The amount of methanol having passed through the membrane was determined with a gas chromatography device of which the detector was connected to the lower detection mouth (35). The results are given in Table 1. The methanol concentration in the Table is a relative value based on the standard amount (1) from Nafion 117. In Fig. 3, 36 is a rubber gasket. In the Table, NG means that the test was impossible since the sample membrane broke.

Table 1

| Proton Conductor | Methanol Concentration | | | Remarks |
|---|---|---|---|---|
| | 4.6 mas% | 18.6 mas% | 46 mas% | |
| E-1 | 0.07 | 0.10 | 0.12 | the Invention |
| E-2 | 0.06 | 0.11 | 0.13 | the Invention |
| E-3 | 0.06 | 0,10 | 0.11 | the Invention |
| E-4 | 0.05 | 0.09 | 0.11 | the invention |
| E-5 | 0.08 | 0.12 | 0.13 | the invention |
| R-1 | 0.30 | NG | NG | comparative sample |

Conclusion:

From Table 1, it is understood that the methanol perviousness through the proton conductors of the invention is at most 1/7 that through Nafion 117.

Example 4 - Determination of Ionic Conductivity:

Circular discs having a diameter of 13 mm were blanked out of the proton conductors of the invention (E-1 to E-5) and the comparative proton conductor (R-1) prepared in Example 1 and out of Nafion 117 (from DuPont) (R-2). Sandwiched between two stainless plates, the ionic conductivity of each of these samples was measured at 25°C and at a relative humidity of 95 % according to an AC impedance process. The results are given in Table 2.

Table 2

| Proton Conductor | Ionic Conductivity × $10^{-3}$ S/cm | Remarks |
|---|---|---|
| E-1 | 0.82 | the Invention |
| E-2 | 0.86 | the Invention |
| E-3 | 0.85 | the Invention |
| E-4 | 0.89 | the Invention |
| E-5 | 0.80 | the invention |
| R-1 | 0.27 | comparative sample |
| R-2 | 6.7 | comparative sample |

Conclusion:

Though not comparable to Nafion 117 (R-2), it is understood that the proton conductors of the invention have a higher ionic conductivity than the comparative proton conductor of no optical anisotropy (hybrid membrane) (R-1).

Example 5 - Construction of Fuel Cell:

(1) Formation of catalyst membrane:

(1-1) Formation of catalyst membrane A:

2 g of platinum-carrying carbon (Vulcan XC72 with 50 mas. % platinum) was mixed with 15 g of a Nafion solution (5 % alcoholic aqueous solution), and dispersed for 30 minutes with an ultrasonic disperser. The mean particle size of the resulting dispersion was about 500 nm. The dispersion was applied onto carbon paper (having a thickness of 350 μm) and dried, and a circular disc having a diameter of 9 mm was blanked out of it. This is catalyst membrane A.

(1-2) Formation of catalyst membrane B:

SOL-1 (0.8 ml) prepared in Example 1- (1) was added to 300 mg of platinum/ruthenium-carrying carbon (20 mas. % platinum and 20 mas.% ruthenium were held on ketjen black) that had been wetted with 0.3 ml of water, and then dispersed for 10 minutes with an ultrasonic disperser. The resulting paste was applied onto carbon paper (having a thickness of 350 μm) and dried, and a circular disc having a diameter of 9 mm was blanked out of it. This is catalyst membrane B.

(1-3) Formation of catalyst membrane C:

A catalyst membrane C was formed in the same manner as above, except that the platinum-carrying carbon as in (1-1) was used in place of the platinum/ruthenium-carrying carbon as in (1-2) .

(2) Fabrication of MEA:

The catalyst membrane A prepared in the above was attached to both surfaces of the proton conductor (E-1 to E-5) prepared in Example 1 and Nafion 117 (R-2) in such a manner that the coated face of the catalyst membrane A could be contacted with the proton conductor, and hot-pressed at 80°C under 3 MPa for 2 minutes to fabricate MEA-1A, MEA-2 to MEA-5, and MEA-R1.

On the other hand, the catalyst membrane B was attached to one face of another proton conductor (E-1) and another Nafion 117, while the catalyst membrane C was to the other face thereof, and these were hot-pressed at 80°C under 1 MPa for 1 minute to fabricate MEA-1B and MEA-R2.

(3) Fuel Cell Properties:

The MEA fabricated in (2) was set in a fuel cell as in Fig. 2, and an aqueous 50 mas.% methanol solution was fed into the cell via the anode-side opening 15. MEA-1B and MEA-R2 were so set that the catalyst membrane B

could be on the anode side and the catalyst membrane C could be on the cathode side. In this condition, the cathode-side opening 16 was kept open to air. Using a galvanostat, a constant current of 5 mA/cm$^2$ was applied between the anode 12 and the cathode 13, and the cell voltage was measured in this stage. The results are given in Table 3.

Table 3

| Proton Conductor | Catalyst Membrane | MEA | Cell C | Time-Dependent Change of Terminal Voltage (V) | | | Remarks |
|---|---|---|---|---|---|---|---|
| | | | | Initial | after 0.5 hrs | after 1 hr | |
| E-1 | A | 1A | 1A | 0.70 | 0.68 | 0.67 | the invention |
| E-2 | A | 2 | 2 | 0.69 | 0.66 | 0.66 | the invention |
| E-3 | A | 3 | 3 | 0.68 | 0.67 | 0.66 | the Invention |
| E-4 | A | 4 | 4 | 0.68 | 0.67 | 0.66 | the Invention |
| E-5 | A | 5 | 5 | 0.68 | 0.67 | 0.66 | the Invention |
| R-2 | A | R1 | R1 | 0.68 | 0.44 | 0.38 | comparative sample |
| E-1 | B, C | 1B | 1B | 0.75 | 0.74 | 0.72 | the Invention |
| R-2 | B, C | R2 | R2 | 0.67 | 0.42 | 0.37 | comparative sample |

Conclusion:

The initial voltage of the cell C-R1 which includes MEA-R1 with Nafion membrane, was high, but the voltage thereof lowered with time. The time-dependent voltage depression in the cell is caused by methanol crossover therein, or that is, the fuel methanol fed to the anode penetrates through the Nafion membrane to reach the cathode. As opposed to this, it is understood that the voltage of the cells C-1A, C-2 to C-5 of the invention, including MEA-1A, MEA-2 to MEA-5, respectively, with the proton conductor of the invention, was stable and the cells all had a higher voltage. In particular, it is understood that the cell C-1B in which the proton conductor is the same type as that in the catalyst membrane is especially excellent.

## Claims

**1.** A compound obtained through sulfonation followed by sol-gel reaction, or through sol-gel reaction followed by sulfonation of at least one compound of the following formulae (I) and (II) :

(I)

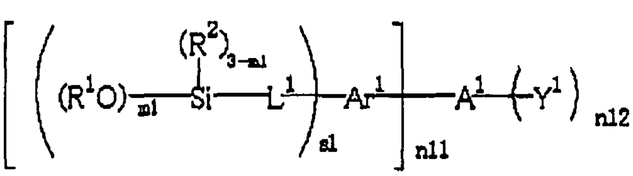

(II)

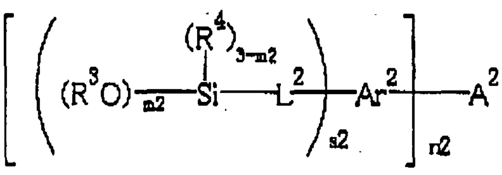

wherein $A^1$ and $A^2$ each independently represent a mesogen-containing organic group; $R^1$ and $R^3$ each independently represent a hydrogen atom, an alkyl group, an aryl group or a silyl group; $R^2$ and $R^4$ each independently represent an alkyl group, an aryl group or a heterocyclic group; m1 and m2 each independently indicate an integer of from 1 to 3; $L^1$ and $L^2$ each independently represent a single bond, an alkylene group, -O-, -CO-, or a divalent linking group of a combination of any of these groups; $Ar^1$ and $Ar^2$ each independently represent an arylene or heteroarylene group having at least one electron-donating group; $Y^1$ represents a polymerizable group capable of forming a carbon-carbon bond or a carbon-oxygen bond through polymerization; n11 and n2 each independently indicate an integer of from 1 to 8; n12 indicates an integer of from 1 to 4; s1 and s2 each independently indicate an integer of 1 or 2.

**2.** The compound of claim 1, which is obtained through sulfonation followed by sol-gel reaction, or through sol-gel reaction followed by sulfonation of at least one compound of the formula (I) .

**3.** The compound of claim 2, which is obtained by sulfonation followed by sol-gel reaction of at least one compound of the formula (I).

**4.** The compound of claim 1, which is obtained through sulfonation followed by sol-gel reaction, or through sol-gel reaction followed by sulfonation of at least one compound of the formula (II) .

**5.** The compound of claim 4, which is obtained through sulfonation followed by sol-gel reaction of at least one compound of the formula (II).

**6.** The compound of any one of claims 1 to 5, wherein the electron-donating group is hydroxyl group.

**7.** The compound of any one of claims 1 to 6, wherein m1 and m2 each independently represent 2 or 3.

**8.** The compound of any one of claims 1 to 6, wherein m1 and m2 represent 3.

**9.** The compound of any one of claims 1 to 8, wherein $Y^1$ represents acryloyl group, methacryloyl group, ethyleneoxide group or trimethyleneoxide group.

**10.** The compound of any one of claims 1 to 9, wherein $R^1$ and $R^3$ each represent an alkyl group having from 1 to 10 carbon atoms.

**11.** The compound of any one of claims 1 to 10, wherein the mesogen is represented by the following formula (III):

(III)

$$[Q^1\text{-}Y^2\text{-}Q^2]_{m3}$$

wherein $Q^1$ represents a single bond, a monovalent group, or an (n12 + 1) -valent linking group; $Q^2$ represents a single bond, an (n11 + 1) -valent group or an (n2 +1)-valent linking group; n11, n12 and n2 are the same numbers as n11, n12 and n2 in the formulae (I) and (II); $Q^2$ bonds to the Si containig group; $Y^2$ represents a divalent, 4-, 5-, 6- or 7-membered ring substituent, or a condensed ring substituent thereof; and m3 is an integer of from 1 to 3.

**12.** The compound of claim 11, wherein $Y^2$ is a 6-membered aromatic group, a 4- to 6-membered saturated or unsaturated alicyclic group, a 5- or 6-membered heterocyclic group, or a condensed ring thereof.

**13.** The compound of any one of claims 1 to 12, wherein $L^1$ and $L^2$ each independently represent an alkylene group having from 2 to 12 carbon atoms.

**14.** The compound of any one of claims 1 to 13, wherein the sulfonation is conducted in the presence of sulfuric acid, chlorosulfonic acid, fuming sulfuric acid, amidosulfuric acid, sulfur trioxide or sulfur trioxide complexes.

**15.** The compound of any one of claims 1 to 13, wherein the sulfonation is conducted in the presence of $SO_3$-DMF, $SO_3$-THF, $SO_3$-dioxane or $SO_3$-pyridine.

**16.** A solid electrolyte containing the compound of any one of claims 1 to 15.

**17.** A proton conductor containing the compound of any one of claims 1 to 15.

**18.** A membrane electrode assembly which has at least two electrodes and the proton conductor of claim 17 between the two electrodes.

**19.** A membrane electrode assembly which has an anode, a cathode and the proton conductor of claim 17 between the anode and the cathode.

**20.** A fuel cell having the membrane electrode assembly of claim 18 or 19.

Fig. 1

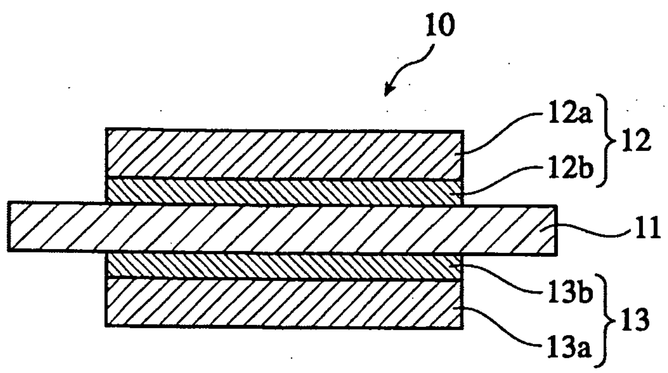


Fig. 2

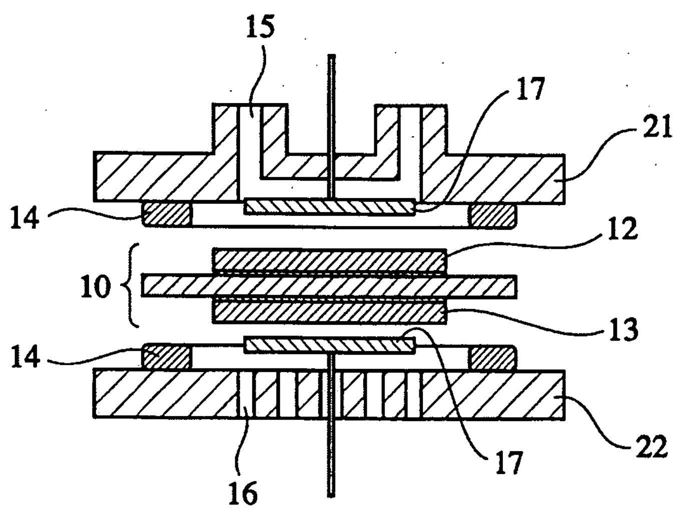

Fig. 3

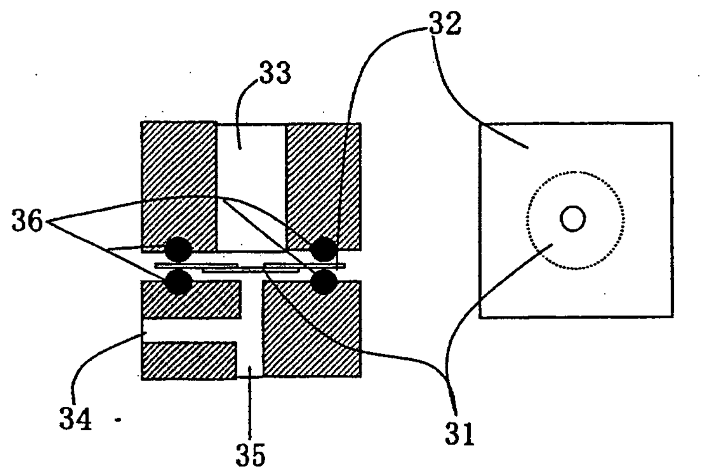

European Patent Office

# EUROPEAN SEARCH REPORT

Application Number
EP 05 00 6828

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,A | EP 1 463 140 A (FUJI PHOTO FILM CO. LTD) 29 September 2004 (2004-09-29) * the whole document * | 1-20 | H01M8/10 C07F7/18 |
| P,A | EP 1 403 953 A (FUJI PHOTO FILM CO. LTD) 31 March 2004 (2004-03-31) * the whole document * | 1-20 | |
| A | WO 03/073543 A (CREAVIS GESELLSCHAFT FUER TECHNOLOGIE UND INNOVATION MBH) 4 September 2003 (2003-09-04) * claim 5 * | 1-20 | |
| D,A | CA 2 431 055 A1 (CREAVIS GESELLSCHAFT FUR TECHNOLOGIE UND INNOVATION MBH) 20 June 2002 (2002-06-20) * claim 6 * | 1-20 | |
| D,A | SLADE R C T ET AL: "Proton conductivity in siloxane and ormosil ionomers prepared using mild sulfonation methodologies" SOLID STATE IONICS, vol. 145, no. 1-4, 1 December 2001 (2001-12-01), pages 127-133, XP004310760 ISSN: 0167-2738 * the whole document * | 1-20 | TECHNICAL FIELDS SEARCHED (Int.Cl.7) H01M C07F |
| A | EP 1 085 038 A (THE SECRETARY OF AGENCY OF INDUSTRIAL SCIENCE AND TECHNOLOGY) 21 March 2001 (2001-03-21) * the whole document * | 1-20 | |

-/--

The present search report has been drawn up for all claims

| Place of search | Date of completion of the search | Examiner |
|---|---|---|
| Munich | 25 July 2005 | Elliott, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

European Patent Office

# EUROPEAN SEARCH REPORT

Application Number
EP 05 00 6828

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN vol. 2000, no. 06, 22 September 2000 (2000-09-22) -& JP 2000 090946 A (AGENCY OF IND SCIENCE & TECHNOL), 31 March 2000 (2000-03-31) * abstract * ----- | | |
| D,A | DEPRE L ET AL: "Inorganic-organic proton conductors based on alkylsulfone functionalities and their patterning by photoinduced methods" ELECTROCHIMICA ACTA, vol. 43, no. 10-11, 30 April 1998 (1998-04-30), pages 1301-1306, XP004134190 ISSN: 0013-4686 * figure 2 * ----- | 1-20 | |
| | | | TECHNICAL FIELDS SEARCHED (Int.Cl.7) |

The present search report has been drawn up for all claims

| Place of search | Date of completion of the search | Examiner |
|---|---|---|
| Munich | 25 July 2005 | Elliott, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)
2

## ANNEX TO THE EUROPEAN SEARCH REPORT ON EUROPEAN PATENT APPLICATION NO. EP 05 00 6828

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2005

| Patent document cited in search report | | Publication date | Patent family member(s) | | | Publication date |
|---|---|---|---|---|---|---|
| EP 1463140 | A | 29-09-2004 | JP | 2004307814 | A | 04-11-2004 |
| | | | EP | 1463140 | A2 | 29-09-2004 |
| | | | US | 2004241522 | A1 | 02-12-2004 |
| EP 1403953 | A | 31-03-2004 | EP | 1403953 | A2 | 31-03-2004 |
| | | | JP | 2004143446 | A | 20-05-2004 |
| | | | US | 2005100772 | A1 | 12-05-2005 |
| WO 03073543 | A | 04-09-2003 | DE | 10208279 | A1 | 23-10-2003 |
| | | | AU | 2003248342 | A1 | 09-09-2003 |
| | | | WO | 03073543 | A2 | 04-09-2003 |
| CA 2431055 | A1 | 20-06-2002 | DE | 10061920 | A1 | 20-06-2002 |
| | | | AU | 2177102 | A | 24-06-2002 |
| | | | WO | 0247801 | A1 | 20-06-2002 |
| | | | EP | 1345674 | A1 | 24-09-2003 |
| | | | JP | 2004515896 | T | 27-05-2004 |
| | | | NO | 20032719 | A | 13-06-2003 |
| | | | PL | 361860 | A1 | 04-10-2004 |
| | | | US | 2004028913 | A1 | 12-02-2004 |
| EP 1085038 | A | 21-03-2001 | JP | 2001307545 | A | 02-11-2001 |
| | | | US | 6680138 | B1 | 20-01-2004 |
| | | | CA | 2319637 | A1 | 17-03-2001 |
| | | | DE | 60020652 | D1 | 14-07-2005 |
| | | | EP | 1085038 | A1 | 21-03-2001 |
| JP 2000090946 | A | 31-03-2000 | JP | 3103888 | B2 | 30-10-2000 |

EPO FORM P0459

For more details about this annex : see Official Journal of the European Patent Office, No. 12/82